(19) Europäisches Patentamt
European Patent Office
Office européen des brevets

(11) **EP 3 767 593 A1**

(12) **EUROPEAN PATENT APPLICATION**

(43) Date of publication:
**20.01.2021 Bulletin 2021/03**

(51) Int Cl.:
***G06T 19/00*** (2011.01)

(21) Application number: **19186864.5**

(22) Date of filing: **17.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Medical Solutions USA, Inc.**
**Malvern, PA 19355 (US)**

(72) Inventors:
• **PETKOV, Kaloian**
 **Lawrenceville, NJ 08648 (US)**
• **QIU, Feng**
 **Pennington, NJ 08534 (US)**
• **SOWRIRAJAN, Anthony Dass**
 **Princeton Junction, NJ 08550 (US)**

(74) Representative: **EIP**
**EIP Europe LLP**
**Fairfax House**
**15 Fulwood Place**
**London WC1V 6HU (GB)**

(54) **METHOD OF GENERATING A COMPUTER-BASED REPRESENTATION OF A SURFACE INTERSECTING A VOLUME AND A METHOD OF RENDERING A VISUALIZATION OF A SURFACE INTERSECTING A VOLUME**

(57) A method of generating a computer-based representation of a surface intersecting a volume comprises: receiving first input data representing the volume and receiving second input data representing a position of the surface with respect to the volume. The method comprises determining first visual parameter data relating to one or more visual characteristics of the volume and determining, based on the first and second input data, a set of points in the volume having a predetermined spatial relationship with the surface. For each of the points in the set of points, second visual parameter data relating to one or more visual characteristics of the respective point in the set of points is assigned. Using the first visual parameter data and the second visual parameter data, a composite representation of the volume and the surface is determined for use in rendering a visualization of the surface intersecting the volume.

Fig 2

EP 3 767 593 A1

## Description

Technical Field

The present invention relates to a method of generating a computer-based visualization of a surface intersecting a volume and a computer-based method of rendering a surface intersecting a volume.

Background

Computer-based visualizations of datasets representing a volume may be generated using techniques generally known as rendering. Rendering may, for example, be used to visualize the results of a medical imaging process, such as a CT scanning process or the like. In the field of medicine, rendering may allow for a radiologist, a surgeon or a therapist to visualize and thereby understand and interpret data representing anatomy. Providing a visualization of such data may, for example, be used for diagnosis, teaching, patient communication etc.

Visualization of volume data is also applied in numerous other technical fields, for example in geological, industrial quality assurance and scientific simulations.

When visualizing a volume, it may in some circumstances be desirable also to visualize one or more planes, or generally surfaces, which may be curved or flat, intersecting the volume. For example, in medical imaging, one or more surface or plane may be used to "clip" the volume. That is, a portion of the volume which is defined by the surface or plane may be removed from view in order to, for example, display interior portions of an anatomical object in the volume.

Summary

According to a first aspect of the present invention, there is provided a method of generating a computer-based representation of a surface intersecting a volume, the method comprising: receiving first input data representing the volume; receiving second input data representing a position of the surface with respect to the volume; determining first visual parameter data relating to one or more visual characteristics of the volume; determining, based on the first and second input data, a set of points in the volume having a predetermined spatial relationship with the surface; assigning, for each of the points in the set of points, second visual parameter data relating to one or more visual characteristics of the respective point in the set of points; and determining, using the first visual parameter data and the second visual parameter data, a composite representation of the volume and the surface for use in rendering a visualization of the surface intersecting the volume.

The predetermined spatial relationship may be a threshold distance from the surface, and each point of the set of points in the volume may be at a distance less than or equal to the threshold distance from the surface. The threshold distance may be from 0.5mm to 5mm or may be around 1mm.

The second visual parameter data relating to one or more visual characteristics of the respective point in the set of points may comprise an opacity associated with the surface at the point.

The method may comprise, for each point of the set of points, determining the opacity associated with the surface at the point based on a distance from the respective point to the surface.

The method may comprise, for each point of the set of points, determining the opacity associated with the surface at the point based on: a closest distance between the point and one or more further surfaces intersecting the volume; and/or a closest distance between the point and a boundary of the volume.

The method may comprise determining the opacity associated with the surface at each point of the set of points based on a spatial relationship, at the point, between the surface and a viewing direction defined with respect to the volume.

Determining a composite representation of the volume and the surface may comprise, at each point of the set of points: determining, based on the opacity associated with the surface at the point and one or more other visual parameters of the point, one or more visual parameters of the composite representation of the surface and the volume at the point.

The one or more other visual parameters of the point may comprise an opacity associated with the volume and a color associated with the volume, and the one or more visual parameters of the composite representation of the surface and the volume at the point may comprise an opacity and a color.

Determining the opacity and the color of the composite representation of the surface and the volume at the point may comprise computing a weighted sum using as inputs: the opacity associated with the surface at the point; a color associated with the surface at the point; the opacity associated with the volume at the point; and the color associated with the volume at the point. Computing the weighted sum may comprise using an alpha-blending formula.

The surface may be configured to be used for clipping a visualization of the volume and the method may comprise clipping, using the surface, portions of the volume from the composite representation of the volume and the surface.

According to a second aspect of the present invention there is provided a computer-based method of rendering a visualization of a surface intersecting a volume, the method comprising: performing the method according to the first aspect to thereby obtain a composite representation of a volume intersected by a surface; and rendering a visualization of the composite representation of the volume and the surface using a volume rendering technique.

The composite representation of the volume and the surface may be defined by one or more visual parameters at a plurality of points in the volume, and the volume rendering technique may comprise: simulating a plurality of rays converging at a viewpoint and passing through the composite representation of the volume and the surface; determining a plurality of sample points in the volume along each of the plurality of rays; accumulating along each of the plurality of rays values of the visual parameters defining the composite representation of the volume and the surface at each sample point along the ray to thereby obtain an accumulated value of the visual parameters for use in displaying a rendering of the volume intersected by the surface.

According to a third aspect of the present invention there is provided a set of machine-readable instructions which when executed by a processor cause a method according to the first aspect or the second aspect to be performed.

According to a fourth aspect of the present invention there is provided a machine-readable medium comprising a set of machine-readable instructions according to the third aspect.

According to a fifth aspect of the present invention there is provided apparatus comprising a processor and a storage comprising a set of machine-readable instructions which when executed by the processor cause the processor to perform a method according to the first aspect or the second aspect.

Brief Description of the Drawings

Figure 1 illustrates a flow chart representation of an example method of determining an illumination effect value for a volumetric dataset;

Figure 2 illustrates schematically a volumetric dataset and an example method of rendering the volumetric dataset, according to an example;

Figure 3 shows an example rendering of a volume intersected by a plurality of planes, produced according to example methods described herein;

Figure 4 shows another example rendering of the volume and planes shown in Figure 3;

Figure 5 illustrates schematically a system comprising an apparatus for rendering a volumetric dataset, according to an example.

Detailed Description

Visualized surfaces are used often together with visualizations of a volume, for example in medical visualization workflow. In examples, a surface may be used to modify a rendering of a volume. For example, a surface may be used to clip, i.e. remove, portions of a volume from the visualization. This may, for example, allow for visualizing a region of interest which is interior to an anatomical object represented in the volume by removing from the visualization portions of the volume which visually obstruct the region of interest. In another example, a surface may define a boundary between respective portions of the volume and different rendering styles may be used for rendering these respective portions of the volume. In examples, a surface may be curved or may be flat, and a flat surface may be referred to as a plane. However, known techniques for visualizing a surface may not show the surface in the context of the object being visualized. Known techniques may, for example, visualize the surface only by showing an intersection of the surface with a bounding box of the volume. As such, it can be unclear from the visualization how the surface intersects interior volumetric structures of the object being visualized. This lack of context in the visualization regarding how the surface intersects the volume may complicate the placement of surfaces by a user, for example where a user wishes to place a surface in a particular position relative to the volume to be used as a clipping surface. Particular difficulties may be encountered in attempting to use the above known techniques to visualize surfaces which are curved.

In known examples which attempt to show more than on outline of the surface intersecting the bounding box, the visualization may be obtrusive. For example, the surface may be visualized as a semi-transparent solid surface and at least partially occlude details of the object. Furthermore, visualization of parts of the volume being intersected by the surface in such examples may require complex techniques for merging a rendering of the volume and the surface.

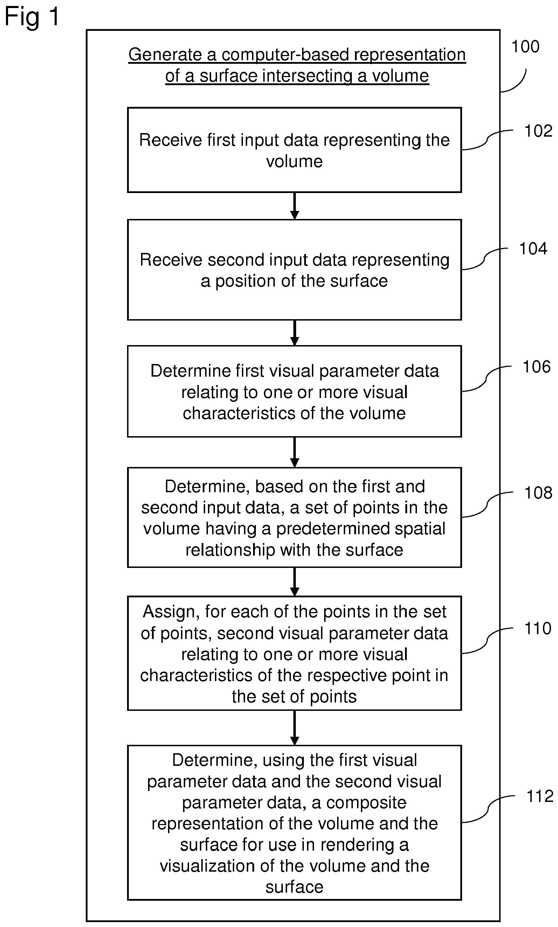

Figure 1 illustrates a flow chart representation of an example method 100 of generating a computer-based representation of a surface intersecting a volume. The method 100 comprises, at block 102, receiving first input data representing the volume. The first data may, for example, be a volumetric dataset comprising a plurality of voxels. The first input data, in some examples, may comprise volumetric data which has been smoothed through interpolation or the like or in another example, an interpolation process could be performed as part of the example method.

At block 104, the method comprises receiving second input data representing the surface. The second input data may represent a flat plane or a curved surface and define the position of the surface with respect to the volume, for example by defining the plane with respect to a suitable coordinate system. The position of the surface with respect to the volume may be pre-defined, for example being set based on input by a user. For example, the surface may be for use as a clipping surface and the user may be able to define the position of the surface with respect to the volume via an input in order to select a portion of the volume to be clipped by the surface.

At block 106, the method comprises determining first visual parameter data relating to one or more visual characteristics of the volume. The visual parameter may be data which is assigned to the volumetric dataset through a classification process. For example, the visual parameter data may be data, such as opacity and/or color, assigned to each voxel in the data. The visual parameter data may be assigned by use of a transfer function. In some examples, the visual parameter data relating to one or more visual characteristics of the volume is determined after the first input data representing the volume is received. For example, a classification process may be performed during a method of volume rendering to determine visual parameter data, e.g. opacity and color data, relating to the volume. In other examples, the first input data may comprise the volumetric data and associated visual parameter data, e.g. the volume data may have been classified prior to the example method.

At block 108, the method comprises determining, based on the first and second input data, a set of points in the volume having a predetermined spatial relationship with the surface. The predetermined spatial relationship may be a threshold distance from the surface at or within which each of the set of points lies. The set of points may, therefore, be determined as those points in the volume which are at or within a predetermined threshold distance from the surface.

At block 110, the method comprises assigning, for each of the points in the set of points, second visual parameter data relating to one or more visual characteristics of the respective point in the set of points. The second visual parameter data may define visual characteristics of the surface at each point of the set of points. For example, the second visual parameter data may comprise an opacity associated with the surface at each point of the set of points. The second visual parameter data may comprise a color associated with the surface at each of the set of points.

In examples, the method, at block 110, may comprise assigning a predetermined value for the second visual parameter data for each point of the set of points. Similarly, where the second visual parameter data comprises a color, the color may be a predetermined color value associated with the surface and assigned for each point of the set of points. For example, a predetermined opacity value may be assigned for each point in the set of points. In other examples, the method at block 110 may involve determining the second visual parameter data to be assigned for each point of the set of points. For example, where the second visual parameter data comprises an opacity, opacity values associated with the surface at each of the set of points may be determined based on a distance of the point from the surface. In examples, the opacity may be determined additionally or alternatively based on a distance of the point from another surface to be visualized and/or a bounding box of the volume and/or an orientation of the surface at the point with respect to a viewing direction defined with respect to the volume.

At block 112, the method comprises determining, using the first visual parameter data and the second visual parameter data , a composite representation of the volume and the surface for use in rendering a visualization of the surface intersecting the volume. In examples, the second visual parameter data relates to one or more visual characteristics of the surface, as described above, and the first visual parameter data relates to one or more visual characteristics of the volume. In such examples, block 110 may comprise determining, from these visual parameter data, further visual parameter data which is representative of a composite of the volume and the surface.

For example, the second visual parameter data determined at block 106 may comprise an opacity and a color associated with the volume. For example, an opacity and a color may be assigned by applying a transfer function to voxel data defining the volume. The visual parameter data associated with the surface may comprise an opacity and a color associated with the surface, as described above. The composite representation of the volume and the surface may then be defined by an opacity and a color obtained by combining in some manner the opacities and colors associated with the volume and the surface respectively. For example, the opacity and the color of the composite representation of the volume and the surface may be determined by computing the result of a compositing or blending formula, e.g. by alpha blending, the respective opacities and colors associated with the volume and the surface. The composite representation of the volume and the surface may be suitable for being rendered using a rendering technique, for example by direct volume rendering.

In examples, the method according to claim 1 therefore provides a composite representation of the volume and the surface by providing a single set of visual parameter data which is representative of the combination of the volume and the surface. In some examples, this combination of visual parameter data may be considered to be a modified classification of the volume. The composite representation of the volume and the surface can subsequently be rendered using an example volume rendering technique, e.g. by integrating along a sample ray in a direct volume rendering technique, to provide a visualization of the surface intersecting the volume.

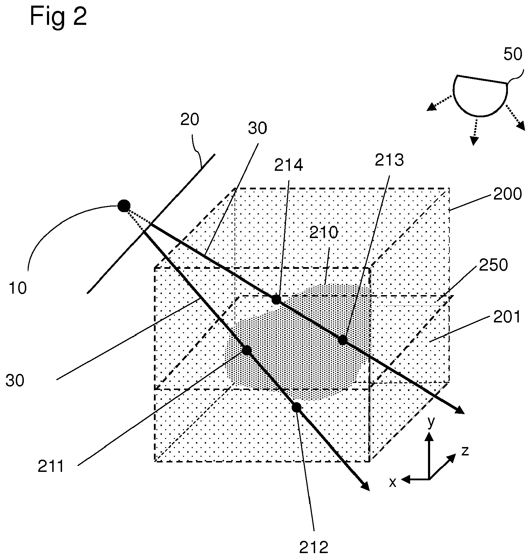

An example of a method of volume rendering into which the example method 100 is incorporated will now be described with reference to Figure 2. Figure 2 illustrates schematically a volumetric dataset 200 and an example method of rendering the volumetric dataset 200. The volumetric dataset 200 may be referred to herein as the volume 200 or the dataset 200.

The volumetric dataset 200 may comprise a discrete sampling of a scalar field. For example, the volumetric dataset 200 may comprise a medical dataset. Such a medical dataset may be received by loading from a memory, sensors, and/or other sources. Such a medical dataset may represent a part of a patient, for example a human or animal patient. In general, any scanning modality which will produce a volumetric dataset may be used to produce the volumetric dataset 200. For example, the scanning modality may comprise the use of computed tomography (CT), or of magnetic resonance imaging (MRI). In some examples a scanning modality comprising the use of positron emission tomography (PET), single photon emission computed tomography (SPECT), ultrasound, or another scan modality may be used. Scan data may be provided in the form of multiple two-dimensional (2D) scans or may be formatted from a scan. In some examples, the volumetric dataset 200 is a DICOM dataset created by scanning at least a portion of a patient using a scanning modality. In other examples, values making up the volumetric dataset 200 may represent geological data (e.g. gathered using seismic data), or as part of industrial quality assurance (e.g. gathered using industrial x-ray scans). In other examples, the volumetric dataset 200 may comprise values representing an object produced via a scientific model rather than measured values representing a physical object. In other examples, a volumetric dataset may comprise data relating to a non-scalar field. For example, the volumetric dataset may comprise data relating to a velocity field produced by a fluid simulation.

In examples, the volumetric dataset 200 may comprise data formatted as a plurality of voxels 201. The voxels 201 may, for example, be in a uniform or non-uniform grid, or may be arranged in some other type of geometry (e.g., polar coordinate format). Each voxel 201 may represent a scalar value, such as scalar value obtained by sampling a scalar field, as described above. The type of scalar value represented by each voxel 201 may be dependent on the means by which the volumetric dataset 200 is obtained. For example, where a CT scanner is used to produce the volumetric dataset 200, the dataset may comprise Hounsfield values. In this example, the volumetric dataset 200 comprises a representation of an object 210, which may be a representation of a portion of a medical patient or the like.

The example method of visualizing the volumetric dataset 200 shown in Figure 2 comprises defining a viewpoint 10 with respect to the volumetric dataset 200. A viewing plane 20 is also defined and located in front of the viewpoint 10. The viewing plane 20 comprises a number of pixels (not shown in the figures), e.g. arranged in a grid, and allows construction of a visualization of the volumetric dataset 200, as viewed from the viewpoint 10. The example method illustrated by Figure 2 may be referred to as direct volume rendering. In an example, direct volume rendering comprises traversing a number of simulated rays 30, 31 through the volumetric dataset 200, wherein each of the rays 30, 31 intersects the viewing plane 20 and the rays 30 are convergent at the viewpoint 10. For example, one ray, or more than one ray, may be traversed through the volume 200 for each pixel of the viewing plane 20.

Each ray 30, which is traversed through the volume 200 may allow determination of a value or set of values for display by a pixel of viewing plane 20 which is intersected by that ray 30. For example, a rendering algorithm may be employed which determines a value for display by the pixel via a calculation taking into account the path of the ray 30 through the volume 200. In some examples, a colour and brightness for the pixel may be determined via traversing a ray 30 through the volume 200 from the viewpoint 10 and calculating the effect on the ray 30 of accumulated visual parameters of parts of the volume 200 which lie along a path of the ray 30. Such an example method may be referred to as direct volume rendering by ray casting.

In examples, each voxel 201 in the volume 200 is classified and assigned visual parameter data. In one example, the visual parameter data assigned to each voxel 201 comprises an opacity and a colour. In examples, the visual parameter data assigned to each voxel 201 is determined via use of a transfer function, as mentioned in examples above. A transfer function may assign visual parameter data to the voxel 201 based on, for example, the scalar value of the voxel 201. In some examples, additional properties related to the voxel 201, such as a gradient of the scalar values of the volumetric dataset 201 at the voxel, may be used an input into a transfer function and therefore may affect the visual parameter data assigned to the voxel 201.

In other examples, a transfer function may assign to a given point in the volume 200 one or more of: a scattering coefficient, a specular coefficient, a diffuse coefficient, a scattering distribution function, a bidirectional transmittance distribution function, a bidirectional reflectance distribution function, and colour information. These parameters may be used to derive a transparency, reflectivity, surface roughness, and/or other properties of the surface of the given point. These surface material properties may be derived based on scalar values of the volumetric dataset at the rendering location, and/or based on user-specified parameters.

In examples, a plurality of sample points within the volumetric dataset 200 along the path of the ray 30 are selected. For example, sample points may be selected at regular intervals along the ray 30. In Figure 2, a plurality of sample points 211, 212, 213, 214 are shown along the rays 30. In examples, some sample points may lie outside of the volume 200 and these points will not contribute to the value/s for display by the pixel with which the ray is associated. It will be appreciated that in some examples sample point locations may be chosen using an algorithm which improves efficiency of the volume rendering method.

It should be noted that at least some of the sample points may not be coincident with a voxel 201 and as such calculations relating to a particular sample point, such as use of the transfer function, may employ interpolation to determine a scalar value at that sample point. For example, the point 211 may not be coincident with one of the voxels 201. Trilinear interpolation, or another example method of interpolation, based on the scalar values of a set of voxels neighbouring the point 211 may then be performed to determine an interpolated scalar value for the point 211. Classifying of the point 211 may then comprise applying the transfer function to the interpolated value of the volumetric dataset 200 at the sample point 211. It will be appreciated that interpolation may be done before applying a transfer function or the like, or values resulting from application of such a function may themselves be interpolated for use in methods herein.

In examples, a rendering algorithm may model an illumination effect by modelling a light source 50 illuminating the volume 200. The illumination effect may be taken into account when accumulating the accumulated opacity and color values along the ray 30. The light source 50 may be a point source, a directional light source, or may comprise a light map. The simulation light source may also be any other kind of light source - e.g. a model of any object which emits light - or a combination of multiple different light sources. In some examples, parts of the volumetric dataset itself may emit light. In some examples, the light source may comprise a high definition light map. The light map in some examples may have six sides corresponding to outer sides of the volumetric dataset where the volume is cuboidal, for example.

Figure 2 also shows a surface 250 intersecting the volume 200. In this example, the surface 250 is a horizontal flat plane. In an example method for generating a visualization of the volume 200 and the plane 250, at each given sample point, e.g. sample point 211 along the ray 30, the distance of the given point from the plane 250 is compared with a predetermined threshold distance. This operation may be performed during classification of the given sample point, which may in some examples be done during the volume rendering process, while the ray 30 is being traversed. The predetermined threshold distance may, for example, be 0.1mm to 5mm, 0.5mm to 2mm, or around 1mm. If the given sample point is at or within the predetermined threshold distance from the plane 250 then the method may determine an opacity associated with the plane 250 to assign at the given sample point. For example, in this case, the sample point 211 may be within the predetermined threshold distance from the plane 250 and so an opacity associated with the plane 250 may be assigned at the sample point 211. Example methods may also comprise determining a value for the opacity to be assigned at the given sample point, as will be described in more detail below.

The plane 250 further has an associated color. The sample point 211 an opacity and a color is associated with the volume 200, which may be determined via use of a transfer function, as has been described above. According to the example method a composite representation of the volume 200 and the plane 250 may be obtained using the opacity and color data associated with the plane 250 and the opacity and color data associated with the volume 200. In an example, this comprises using the opacities and colors of the plane 250 and the volume 200 as input parameters into an alpha blending or alpha compositing formula to thereby obtain as an output from the formula an opacity and a color. The opacity and the color output from the alpha blending formula defines a composite representation of the volume 200 and the plane 250 at the sample point 211. The opacities and colors for this composite representation of the volume 200 and the plane 250 may then be accumulated in the above described integration-based volume rendering process.

Accordingly, the example method may be considered to be a method of modifying the classification of the volume 200 during a volume rendering process, in order that the modified classification represents a composite of the volume 200 and the plane 250.

It should be noted that the above-described method may equally be applied to visualizing curved surfaces since the geometry of the surface is taken into account in determining the set of points which lie within a predetermined threshold distance from the surface. Accordingly, visualizing a curved surface may not require a significantly different workflow to visualizing a flat plane. Furthermore, the information regarding the composite representation of the surface and the volume is contained in a composite set of visual parameters to be used in a volume rendering process. Therefore, applying complex visual effects during volume rendering, such as irregular lens shape effects (e.g. an effect simulating a fish-eye lens, a lens with barrel distortion, a spherical or cylindrical camera etc.) or complex lighting techniques may not require specific consideration of the surface being visualized since the surface is implicitly sampled during example methods described herein.

Further details of example methods for determining the composite representation of the volume and the surface intersecting the volume will now be described.

In examples, at each voxel classification operation during a ray integration operation as has been described above with reference to Figure 2, at a position x in the volume, the following parameters are evaluated for each plane P to be visualized (where there may be one or more planes P intersecting the volume being visualized):

$d_{plane}$ is a closest distance from the point x to plane P;

$d_{clip}$ is a closest distance to a clipping plane, where a clipping plane is a plane which is being used to clip a portion of the volume from a given visualization;

$d_{bbox}$ is a closest distance from the point x to a bounding box of the volume;

$V$ is a direction of the viewing ray that is currently being integrated;

$N$ is a normal vector for plane P; and

$N_{clip}$ is a normal vector for a clipping plane closest to the point x.

In examples, an opacity associated with the plane P at the point x may be determined using an opacity function. The opacity function may take one or more inputs based on the above-described parameters. The opacity associated with the plane and the color associated with the plane may be referred to in this example as the plane opacity and plane color respectively. While this example is described in terms of a plane P, the principles described apply equally to one or more non-flat surfaces intersecting the volume.

In an example, the parameters

$d_1 = d_{plane}$; and
$d_2 = \min(d_{plane}, d_{bbox})$

are used in an opacity function for determining the plane opacity at the point x.

For example, $d_1$ may be compared to a pre-determined threshold distance. If $d_1$ is greater than the pre-determined threshold distance, the opacity function may provide a plane opacity of zero to be assigned to the point x. If, however, $d_1$ is less than or equal to a pre-determined threshold distance, i.e. the point x is within the pre-determined threshold distance from the plane P, a non-zero plane opacity may be assigned to the point x in order to allow visualization of the plane P at the point x.

The pre-determined threshold distance can be considered to define a line thickness for the visualization of the plane P since points within the predetermined threshold distance from the plane P may be visualized as a part of the plane P. The predetermined threshold distance may, for example, be set according to a user's preference.

The plane opacity assigned to points x having a value for $d_1$ less than or equal to the predetermined threshold distance may be a set value. For example, where the plane opacity can take values of 0 to 1, the plane opacity may be set to 1 for points at or within the pre-determined threshold distance from the plane P. The plane opacity may be set to zero for points at a distance greater than the pre-determined threshold distance from the plane P.

In another example, an opacity function may provide values for the plane opacity which vary with distance from the plane P. For example, the opacity function may be configured to provide an opacity value which ramps up from zero at the predetermined threshold from the plane to a maximum value at the plane. The maximum value for the plane opacity at the plane P may in some examples be 1 or may be less than 1. The opacity function may, for example, increase linearly, exponentially, or si-nusoidally with decreasing $d_{plane}$ from an opacity value at the threshold distance to the maximum opacity value at a distance of zero from the plane P. This may provide for a smoothing effect in the visualization of the plane.

In some examples, the opacity function may provide values which vary based on the value of $d_2$. For example, if the point x is within the threshold distance from the plane P, and is nearer to the plane P than to the boundary of the volume (i.e. $d_{plane}$ is smaller than $d_{bbox}$) then the opacity function provides an opacity values which is dependent on the value of $d_{plane}$, as described above. However, at a point x which is close to the plane P but which is closer to the boundary of the volume (i.e. $d_{bbox}$ is smaller than $d_{plane}$) the opacity function may provide a value which varies based on the value of $d_{bbox}$. The opacity function can thereby take into account the proximity of the point x from the plane P and from the bounding box in order to allow effective visualization of the plane intersecting the bounding box. For example, the plane opacity may be configured to fade away to zero towards the intersection of the plane P with the boundary, for example, in order to avoid the boundary being made opaque.

In examples, the value provided by the opacity function may be modulated by one or more heuristics. For example, the visualization of the plane P may be configured to fade away where the plane P starts to overlap another plane which is operating as a clipping plane. For example, the result of the following expression at the point x may be computed and used in a heuristic for modulating the opacity function.

$$d_{clip} \, | \, N_{clip} \cdot N |$$

A threshold may be determined, for example being predetermined or specified by a user, against which the result of the above expression at point x is compared. If the value of the above expression at point x is at or below the threshold value, the opacity function may be modulated to reduce the plane opacity, for example by an amount determined by the value of the value of the above expression.

Accordingly, at points where the plane P overlaps a clipping plane, the plane opacity of the plane P may be configured to fade away. This can avoid coloring of voxels within the threshold distance of the plane P and along the clipping plane not to be colored when a composite representation of the volume and the plane is generated. In some examples this may aid the overall visualization of the plane/s and the volume.

Another example heuristic may be applied which results in modulating the opacity assigned to the plane P at the point x based on a degree of alignment between the plane P and the viewing direction **V.** For example, when the viewing direction **V** is oriented at an oblique angle to the plane P, the predetermined distance threshold used to determine which voxels are assigned a non-zero plane opacity may be changed, for example lowered. This may provide a more consistent visualization of the plane when the volume and the plane are viewed from different viewing directions **V.** In one example, this modulation is done by comparing the result of the following expression at point x to a threshold and modulating the opacity function based on the result, if the result is below the threshold:

$$1 - |V \cdot N|$$

Using the above described methods, various types of visualization of one or more surfaces intersecting the volume can be generated. In some examples, acceleration techniques may be used to reduce the required number of computations. For example, above a certain distance from the plane, where the it is clear that the plane will not be visualized, some or all of the above comparisons of parameters against threshold values may not be computed.

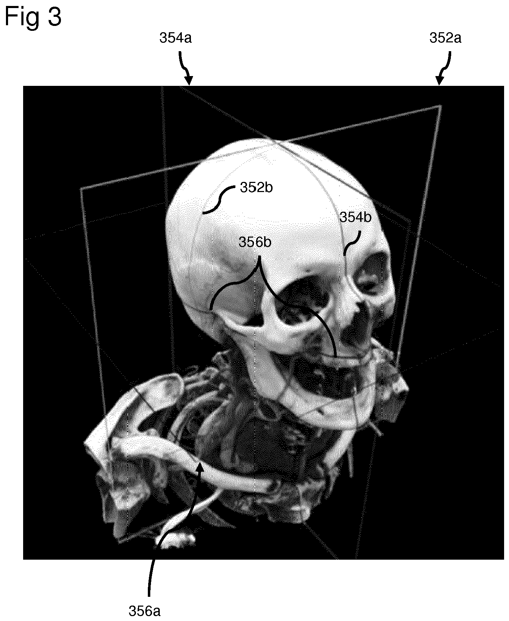

For example, Figure 3 shows a rendering of a volume intersected by three planes produced according to a method described herein. In this example, the planes are visualized via their respective intersections 352a, 354a, 356a with the bounding box of the volume and via respective projection lines 352b, 354b, 356b onto an anatomical object represented in the volume. The planes may have different respective colors. The lines 352b, 354b, 356b are the result of an opacity and color of each of the planes (determined as described above) being alpha-blended with an opacity and color related to the volume (determined by use of a transfer function in this example). Accordingly, the thickness and appearance of the lines 352a, 352b, 354a, 354b, 356a, 356b is determined by the predetermined threshold distance and any applied modulating effects as have been described above. The lines 352b, 354b, 356b may allow a user to effectively align the respective planes to a desired position, for example with reference to the anatomical object represented by the volume, to be used as a clipping plane.

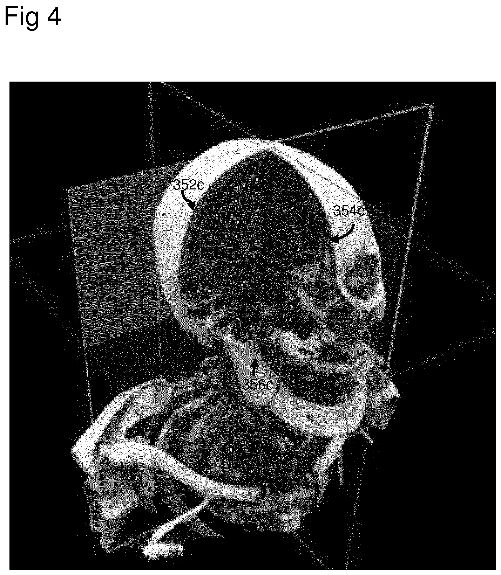

Figure 4 shows an example in which the planes shown in Figure 3 are each used as clipping planes. In this example, alpha-blending of voxel opacity and color values with opacity and color values assigned to the plane results in coloring of portions of the volume lying within the predetermined threshold distance of each of the planes. For example, the portion 354c may be colored red the where the color of the plane intersecting that portion 354c of the volume is red. Similarly, the portion 352c may be colored green the where the color of the plane intersecting that portion 352c of the volume is green. In Figure 4, a third portion of the volume is clipped by the third (horizontal) plane and the portion 356c of the volume lying along the third plane may be colored blue where the third plane is blue. In some examples a semi-transparent rendering of a clipping plane may be produced, such that the plane may be visualized via a semi-transparent coloring provided along the region of the volume bounded by the clipping plane. This can result in a visualization of the entire surface of the plane.

While the above examples have been described with reference to a ray casting technique, it should be appreciated that in other examples, the above method may be used with another type of volume rendering technique, such as a path tracing technique. The visualization of the plane may be configured to have particular properties when used in a method of volume rendering utilising a path tracing technique. For example, the visualization of the plane may be configured to interact only with a primary light bounce in some examples, while in other examples, the visualization of the plane may be configured to interact with the primary light bounce and one or more subsequent light bounces, for example all light bounces. Where the visualization of the plane is configured to interact with subsequent light bounces, the visualization of the plane may be visible via reflective surfaces, for example.

Furthermore, in some examples, various physically-based material or optical properties may be applied to the plane visualization. For example, a glow effect may be applied to the plane visualization such that the visualized intersection between the plane and the volume may appear to glow. In such examples, the visualization of the plane may simulate a laser line projected onto objects in the volume which are intersected by the plane.

In some examples, the visualization of a projection line of a plane onto a portion of the volume may involve adding a background color to provide contrast for allowing the line to be visualized. For example, where the plane color is similar to the color of the volume it may be difficult to distinguish the resulting line from neighbouring portions of the volume. In one example, a shadow effect, which is thicker than the projection line of the plane, is added. The plane color may then be alpha blended with the portion of the volume as colored by the shadow effect, and therefore suitable contrast may be provided to allow the line to be clearly seen.

While above examples have described the intersection between the surface/plane and the bounding box of the volume by determining opacity and color values for points at which the plane intersects the bounding box, in other examples, an intersection between the surface/s and the bounding box of the volume may be computed outside of the volume rendering process and combined with a visualization of the volume, for example, using line primitives. In such examples, the line primitives may be merged with the rendering of the volume into a final visualization by using a suitable depth merging process. In an example, the depth merging process may comprise z-buffering.

In one example, the method of rendering the intersection between the surface/s and the bounding box of the volume comprises:

> rendering intersection lines for back-facing primitives of the bounding box;
> rendering the volume; and
> rendering intersection lines for front-facing primitives of the bounding box.

In another example, portions of the surface may be rendered as a semi-transparent object outside of the volume rendering process and depth-merged with a rendering of the volume to produce a final visualization. In one example, depth-peeling or a similar order-independent transparency rendering approach may be used to merge a rendering of the surface and of the volume into a combined rendering.

Although certain examples described above relate to direct volume rendering and of determining opacity and color values for providing a composite representation of a volume intersected by a surface, example methods described herein may be applied in a method of non-direct volume rendering. For example, methods described herein may be used in a mesh-based or surface-based rendering technique, for example to visualize the volume by rendering iso-surfaces of the volume. In one example using a mesh-based workflow, a 3D mesh represents the volume. In examples, the mesh may be a segmentation surface, for example, a heart or liver segmentation, or a segmentation surface representing a particular object, such as a medical device. In other examples, mesh-based rendering may be used in non-medical contexts and the mesh may be a segmentation surface relating to, for example, a computer generated model of a building. In mesh-based examples, determining points in the volume having a predetermined spatial relationship with the surface may comprise determining a mesh-based intersection between the surface and the 3D mesh. The intersection between the surface and 3D mesh may then be shaded based on a color associated with the surface in order to provide a composite representation of the surface and the 3D mesh. In some examples, the intersection between the surface and the 3D mesh may be computed as connected line segments. These line segments may be assigned a color value based on the color of the 3D mesh and/or of the surface. For example, the line segments may be assigned a color which is based on the color of the 3D mesh but having a different intensity, for example double or half the intensity of the color associated with the 3D mesh. In another example, the line segments may be assigned a color which is based on a combination of the color associated with the 3D mesh and the color associated with the surface intersecting the 3D mesh. The line segments representing the intersection between the surface and the mesh may be visualized in a suitable rendering technique, for example by direct rendering. In an example method using ray tracing the line segments may be visualized by a suitable process such as extruding cylinders.

In another example of a surface rendering technique, determining the set of points in the volume having the predetermined spatial relational the plane comprises computing, as line segments, an explicit intersection between the plane and the surface included in the volume. For example, an iso-surface may be extracted from the volume data, for example using a Marching Cubes algorithm, or similar. The resulting iso-surface may be intersected with the plane in order to determine the set of points. The set of points may thus comprise a curve representing an intersection between the surface and an iso-surface in the volume. This curve, in examples, may undergo additional processing, such as topological correction, resampling, and smoothing.

In a further example, related to the above example in which an explicit intersection between a surface extracted from the volume and the surface to be visualized is computed, an active contour algorithm may be used in order to provide a visualization of the surface at the intersection point. For example, such a method may comprise deforming an intersection between the surface to be visualized and the bounding box of the volume towards the intersected iso-surface of the volume. A set of line segments following the intersection between the iso-surface and the surface to be visualized is therefore generated. These line segments may be visualized, in some examples, using a line rendering technique.

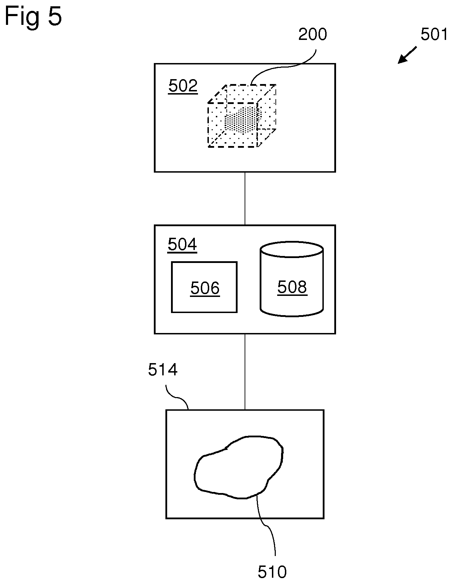

Referring now to Figure 5, there is illustrated schematically an example system 501 in which an example rendering apparatus 504 may be used. The system 501 comprises a scanner 502, the rendering apparatus 504, and a visualization unit 514. In examples, the system may comprise fewer components than or additional components to those illustrated in Figure 5. For example, the system 501 may comprise a computer network such as the internet.

The scanner 502 may be any scanner for generating a dataset comprising the volumetric dataset 200, which, as described may, for example, be a medical volumetric dataset representing a portion of a patient. For example, the scanner 502 may be a computed tomography (CT) scanner, a magnetic resonance imaging (MRI) scanner, a positron emission tomography (PET) scanner, an ultrasound scanner or the like. In another example the scanner 502 may, for example, be for producing a volumetric dataset representing geological data. The scanner 502 is connected to the rendering apparatus 504, for example via wired or wireless connection. The scanner 502 may be arranged to provide the volumetric dataset to the rendering apparatus 504.

The rendering apparatus 504 comprises a processor 506 and a memory, in the form of a storage 508. In this example, the rendering apparatus 504 is arranged to perform the above described method of determining a modification to optical parameters for visualizing a plane and/or of rendering the volumetric dataset. For example, the storage 508 may comprise a machine-readable medium comprising a set of machine-readable instructions which when executed by the processor 506 cause the rendering apparatus 504 to perform an above-described example method. The program may be stored on a computer readable medium which may be read by the rendering apparatus 504 to thereby execute the program. The rendering apparatus 504 may be arranged to receive directly or indirectly or otherwise acquire from the scanner 502 the volumetric dataset 200.

The volumetric renderer 504 may comprise a processor for operating any rendering algorithm capable of simulating light transport within the volumetric dataset 200. An example suitable rendering algorithm is a ray casting method comprising a method of visualizing one or more planes as described above.

The rendering apparatus 504 may be arranged to transmit information, for example, a colour value for each pixel in a image plane, to a visualization unit 514. The transmission may be direct or indirect, for example via a wired connection, a wireless connection, or via the internet.

The visualization unit 514 may comprise visualization software for displaying a two-dimensional projection of a three-dimensional object 510. The visualization unit 514 may comprise a display screen, and one or more graphics hardware or software components. In some examples, the visualization unit 514 may be or comprise a mobile device. In some examples the visualization unit 514 may comprise a virtual-reality device.

Although the invention has been described in the context of a direct volume rendering algorithm employing a ray casting approach, as mentioned above, it should be appreciated that the invention may be applied in other example methods of visualizing a volume. For example, the above described method of determining a composite representation of a volume and a surface may be used in other volume rendering techniques. For example, such methods may be employed in volume rendering techniques such as path tracing, splatting, or shear warp.

The above embodiments are to be understood as illustrative examples of the invention. Other embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A method of generating a computer-based representation of a surface (250) intersecting a volume (200), the method comprising:

   receiving first input data representing the volume (200);
   receiving second input data representing a position of the surface (250) with respect to the volume (200);
   determining first visual parameter data relating to one or more visual characteristics of the volume (200);
   determining, based on the first and second input data, a set of points in the volume (200) having a predetermined spatial relationship with the surface (250);
   assigning, for each of the points (211) in the set of points, second visual parameter data relating to one or more visual characteristics of the respective point (211) in the set of points; and
   determining, using the first visual parameter data and the second visual parameter data, a composite representation of the volume (200) and the surface (250) for use in rendering a visualization of the surface (250) intersecting the volume (200) .

2. A method according to claim 1, wherein the predetermined spatial relationship is a threshold distance from the surface (250), and wherein each point (211) of the set of points in the volume (200) is at a distance less than or equal to the threshold distance from the surface (250), and optionally, wherein the threshold distance is from 0.5mm to 5mm or around 1mm.

3. A method according to claim 1 or claim 2, wherein the second visual parameter data relating to one or more visual characteristics of the respective point (211) in the set of points comprises an opacity associated with the surface (250) at the point (211).

4. A method according to claim 3 wherein the method comprises, for each point (211) of the set of points, determining the opacity associated with the surface (250) at the point based on a distance from the respective point (211) to the surface (250).

5. A method according to claim 3 or claim 4 wherein the method comprises, for each point (211) of the set of points, determining the opacity associated with the surface (250) at the point (211) based on:

   a closest distance between the point (211) and one or more further surfaces intersecting the volume (200); and/or
   a closest distance between the point (211) and a boundary of the volume (200).

6. A method according to any of claims 3 to 5 wherein the method comprises determining the opacity associated with the surface (250) at each point (211) of the set of points based on a spatial relationship, at the point (211), between the surface (250) and a viewing direction defined with respect to the volume (200) .

7. A method according to any of claims 4 to 6, wherein determining a composite representation of the volume (200) and the surface (250) comprises, at each point (211) of the set of points:
determining, based on the opacity associated with the surface (250) at the point (211) and one or more other visual parameters of the point (211), one or more visual parameters of the composite representation of the surface (250) and the volume (200) at the point (211).

8. A method according to claim 7 wherein the one or more other visual parameters of the point (211) comprises an opacity associated with the volume (200) and a color associated with the volume (200), and wherein the one or more visual parameters of the composite representation of the surface (250) and the volume (200) at the point (211) comprise an opacity and a color.

9. A method according to claim 8, wherein:
determining the opacity and the color of the composite representation of the surface (250) and the volume (200) at the point (211) comprises computing a weighted sum using as inputs:

the opacity associated with the surface (250) at the point (211);
a color associated with the surface at the point (211) ;
the opacity associated with the volume (200) at the point (211); and
the color associated with the volume (200) at the point (211);
and, optionally, wherein computing the weighted sum comprises using an alpha-blending formula.

10. A method according to any of the preceding claims wherein the surface (250) is configured to be used for clipping a visualization of the volume (200) and the method comprises clipping, using the surface (250), portions of the volume (200) from the composite representation of the volume and the surface.

11. A computer-based method of rendering a visualization of a surface (250) intersecting a volume (200), the method comprising:

performing the method according to any of claims 1 to 10 to thereby obtain a composite representation of a volume (200) intersected by a surface (250); and
rendering a visualization of the composite representation of the volume (200) and the surface (250) using a volume rendering technique.

12. A method according to claim 11 wherein the composite representation of the volume (200) and the surface (250) is defined by one or more visual parameters at a plurality of points in the volume (200), and wherein the volume rendering technique comprises:

simulating a plurality of rays (30) converging at a viewpoint (10) and passing through the composite representation of the volume and the surface;
determining a plurality of sample points (211) in the volume (200) along each of the plurality of rays (30);
accumulating along each of the plurality of rays (30) values of the visual parameters defining the composite representation of the volume and the surface at each sample point (211) along the ray (30) to thereby obtain an accumulated value of the visual parameters for use in displaying a rendering of the volume (200) intersected by the surface.

13. A set of machine-readable instructions which when executed by a processor (506) cause a method according to any of claims 1 to 12 to be performed.

14. A machine-readable medium comprising a set of machine-readable instructions according to claim 13.

15. Apparatus (504) comprising a processor (506) and a storage (508) comprising a set of machine-readable instructions which when executed by the processor (506) cause the processor (506) to perform a method according to any of claims 1 to 12.

Fig 1

Generate a computer-based representation
of a surface intersecting a volume — 100

Receive first input data representing the
volume — 102

Receive second input data representing
a position of the surface — 104

Determine first visual parameter data
relating to one or more visual
characteristics of the volume — 106

Determine, based on the first and
second input data, a set of points in the
volume having a predetermined spatial
relationship with the surface — 108

Assign, for each of the points in the set
of points, second visual parameter data
relating to one or more visual
characteristics of the respective point in
the set of points — 110

Determine, using the first visual
parameter data and the second visual
parameter data, a composite
representation of the volume and the
surface for use in rendering a
visualization of the volume and the
surface — 112

# Fig 2

Fig 3

Fig 4

Fig 5

Europäisches
Patentamt

European
Patent Office

Office européen
des brevets

## EUROPEAN SEARCH REPORT

Application Number

EP 19 18 6864

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/245465 A1 (HANSEGARD JOGER [NO] ET AL) 27 September 2012 (2012-09-27) <br> * figures 1, 2, 4, 5, 8, 10, 11, 13 * <br> * paragraph [0001] - paragraph [0006] * <br> * paragraph [0024] - paragraph [0053] * <br> ----- | 1-15 | INV. <br> G06T19/00 |
| X | WO 2015/030973 A2 (GEN ELECTRIC [US]) 5 March 2015 (2015-03-05) <br> * figures 1, 2, 4-7 * <br> * paragraph [0001] - paragraph [0007] * <br> * paragraph [0022] - paragraph [0026] * <br> * paragraph [0033] - paragraph [0043] * <br> ----- | 1-15 | |
| X | WO 2017/212063 A1 (KONINKLIJKE PHILIPS NV [NL]) 14 December 2017 (2017-12-14) <br> * figures 1B, 3A-3E * <br> * paragraphs [0024], [0025] * <br> * paragraph [0030] - paragraph [0033] * <br> ----- | 1,3,6-15 | |
| X | TEISTLER M ET AL: "Simplifying the Exploration of Volumetric Images: Development of a 3D User Interface for the Radiologist's Workplace", JOURNAL OF DIGITAL IMAGING ; THE JOURNAL OF THE SOCIETY FOR COMPUTER APPLICATIONS IN RADIOLOGY, SPRINGER-VERLAG, NE, vol. 21, no. 1, 27 March 2007 (2007-03-27) , pages 2-12, XP019637428, ISSN: 1618-727X <br> * figures 1-5 * <br> * abstract * <br> * page S2 - page S7 * <br> ----- | 1,11-15 | TECHNICAL FIELDS SEARCHED (IPC) <br><br> G06T |
| X | US 2011/137156 A1 (RAZZAQUE SHARIF [US] ET AL) 9 June 2011 (2011-06-09) <br> * figures 36A-36D * <br> * paragraphs [0089], [0094], [0159] * <br> * paragraph [0198] * <br> ----- | 1-15 | |

-/--

The present search report has been drawn up for all claims

| Place of search | Date of completion of the search | Examiner |
|---|---|---|
| Berlin | 17 December 2019 | Höller, Helmut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 19 18 6864

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LACROUTE P G: "Fast Volume Rendering Using a Shear Warp Factorization of the Viewing Transformation", TECHNICAL REPORT CSL-TR-95-678, XX, XX, 1 September 1995 (1995-09-01), pages 1-222, XP002247938, * page 173 - page 176 * | 1-15 | |

-----

|  |  |
|---|---|
| | TECHNICAL FIELDS SEARCHED (IPC) |

The present search report has been drawn up for all claims

| Place of search | Date of completion of the search | Examiner |
|---|---|---|
| Berlin | 17 December 2019 | Höller, Helmut |

EPO FORM 1503 03.82 (P04C01)

## ANNEX TO THE EUROPEAN SEARCH REPORT
## ON EUROPEAN PATENT APPLICATION NO.

EP 19 18 6864

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2019

| Patent document cited in search report | | Publication date | Patent family member(s) | | Publication date |
|---|---|---|---|---|---|
| US 2012245465 | A1 | 27-09-2012 | CN<br>US | 102697523 A<br>2012245465 A1 | 03-10-2012<br>27-09-2012 |
| WO 2015030973 | A2 | 05-03-2015 | US<br>WO | 2015065877 A1<br>2015030973 A2 | 05-03-2015<br>05-03-2015 |
| WO 2017212063 | A1 | 14-12-2017 | CN<br>EP<br>JP<br>US<br>WO | 109601018 A<br>3469553 A1<br>2019517350 A<br>2019272667 A1<br>2017212063 A1 | 09-04-2019<br>17-04-2019<br>24-06-2019<br>05-09-2019<br>14-12-2017 |
| US 2011137156 | A1 | 09-06-2011 | US<br>US<br>US | 2011137156 A1<br>2014142426 A1<br>2017065352 A1 | 09-06-2011<br>22-05-2014<br>09-03-2017 |

EPO FORM P0459

For more details about this annex : see Official Journal of the European Patent Office, No. 12/82